# EUROPEAN PATENT APPLICATION

(11) **EP 1 383 283 A1**
(43) Date of publication of application: **21.01.2004**
(21) Application number: 02360196.6
(22) Date of filing: 03.07.2002
(51) Int. Cl.: H04L 12/56

(54) **A method for operating a cellular time division multiple access communication system**

(71) Applicant: ALCATEL, 75008 Paris (FR)
(72) Inventor: Klein, Siegfried, 70469 Stuttgart (DE)
(74) Representative: Richardt, Markus Albert

(57) **Abstract**

Method for operating a cellular time division multiple access communication system in direct mode, the communication system having a set of mobile terminals within a cell, at least a first subset of the mobile terminals being capable of operating in a central controller mode and a first one of the mobile terminals of the first subset being in central controller mode for the cell, and a first transmission frequency being selected to establish communication links in the cell, the method comprising the steps of:
- receiving a request to establish an additional communication link,
- when the cell capacity is not sufficient to establish the additional communication link; splitting the cell into at least first and second cells by selecting a second one of the mobile terminals of the first subset to operate in the central controller mode for the second cell, selecting a second frequency to establish communication links in the second cell, and selecting a second subset of the mobile terminals of the set of mobile terminals to belong to the second cell.

## Description

### Field of the invention

The present invention relates to the field of cellular time division multiple access communication systems, and more particularly to HiperLAN 2, Bluetooth™ and IEEE 802.11 a or b type communication systems.

### Background and prior art

A variety of wireless local area networks (WLAN) is known from the prior art. One example is the HiperLAN2 standard. In a HiperLAN2 network users connect their Mobile Terminals (MT) to an Access Point (AP) and move around in the area covered by the APs, and where the terminal requests handover if an AP with a better signal strength is available. Communicating with an AP ("network mode") is referred to as Centralized Mode communication in HiperLAN2, and communication between MTs ("peer-to-peer mode") without passing information via the AP is referred to as Direct Mode. Traffic scheduling is centralized to the AP in HiperLAN2. This is important as to optimise the use of radio resources, which is especially important when number of users increase.

For a home environment, a HiperLAN2 network is operated as an adhoc LAN, which can be put into operation in a plug-and-play manner. The HiperLAN2 home system shares the same basic features with the HiperLAN2 business system by defining the following equivalence between both systems:
- A subnet in the adhoc LAN configuration is equivalent to a cell in the cellular access network configuration.
- A central controller in the adhoc LAN configuration is equivalent to the access point in the cellular access network configuration. However, the central controller is dynamically selected from HiperLAN2 portable devices and can be handed over to another portable device, if the old one leaves the network.
- Multiple subnets in a home is made possible by having multiple central controllers (CCs) operating at different frequencies.

HiperLAN2 supports two basic modes of operation:
- Centralized mode: In this mode, an AP is connected to a core network which serves the MTs associated to it. All traffic has to pass the AP, regardless of whether the data exchange is between an MT and a terminal elsewhere in the core network or between MTs belonging to this AP. The basic assumption is that a major share of the traffic is exchanged with terminals elsewhere in the network. This feature is mandatory for all MTs and APs.
- Direct mode: In this mode, the medium access is still managed in a centralized manner by a CC. However, user data traffic is exchanged between terminals without going through the CC. It is expected that in some applications (especially, in a home environment), a large portion of user data traffic is exchanged between terminals associated with a single CC. This feature is intended for use within home environment, and hence, is mandatory in Data Link Control (DLC)-home extensions.

A central controller may also be connected to a core network and, thus, shall be able to operate in both direct and centralized mode.

Traffic is transmitted in a Media Access Control (MAC) frame with a length of 2 ms. Besides protocol control information, each MAC contains user traffic for both uplink and downlink directions. This slotted structure is usually referred to as Time-Division-Duplex (TDD). For the uplink, the AP assigns a descriptor for each MT specifying when and for what duration in the MAC frame an MT is allowed to transmit. Traffic resources for both uplink and downlink directions and for each MT can be entirely dynamically allocated depending on the demand for transmission resources (enabling prioritising traffic for types of applications or for different level of users).

In essence, HiperLAN2 is a flexible Radio LAN standard designed to provide high speed access to a variety of networks including 3G mobile core networks, ATM networks and IP based networks, and also for private use as a wireless LAN system. Basic applications include data, voice and video, with specific QoS parameters taken into account. HiperLAN2 systems can be deployed in offices, classrooms, homes, factories, hot spot areas like exhibition halls and more generally where radio transmission is an efficient alternative or a complement to wired technology.

The published HiperLAN2 standard documents are hereby incorporated by reference. These documents can be obtained from the website of the European Telecommunications Standards Institute (www.etsi.com). In particular the standard ETSI TR 101 683 Broadband Radio Access Networks (BRAN); HIPERLAN Type 2 provides an overview of the system components of a HiperLAN2 system. The standard ETSI TS 101 761-2 V1.2.1C (2001-02) specifies the Dynamic Frequency Selection (DFS) for the cells.

From WO 00/60 811 a HiperLAN2 communications system is known with mobile terminal sleep phase assignment for the purpose of minimising power consumption.

DE 197 00 303 shows a time division multiple access telecommunications system comprising a dynamic frequency selection scheme.

DE 199 46 540 shows a HiperLAN2 telecommunications system which supports coexisting mobile radio systems in the same frequency band.

US patent no. 4,759,051 shows a cellular radio telephone system where the number of channels assigned to a radio zone can be changed to suite conditions. In addition, the shapes and sizes of the radio zones can be varied with changes in user dispersion, to reduce the likelihood that all assigned channels in a given radio zone will be in use at the same time. A change in shape and size of a radio zone is carried out by breaking the communication link between a group of transponders and one cell set, and establishing a communication link between the same transponders and a different cell set.

WO 94/18 804 shows a method of assigning and sharing channels in a cellular communication system. A base station of a cell can borrow channels for transmission and reception from adjacent cellular base stations. To prevent a cell from borrowing to many channels, a threshold is set as an upper limit for the maximum number of channels a cell can borrow.

US patent no. 5,974,323 shows a frequency allocation plan for a wireless communication system that accommodates growth in demand from a low density reuse pattern to a high efficiency use pattern while reducing the number of cells.

Further examples for WLANs include the IEEE 802.11 a and b standards. In contrast to HiperLAN2, IEEE 802.11 a shares the 20-MHz channel in time using CSMA/CA (carrier sense multiple access with collision avoidance). HiperLAN2 uses a different MAC from the one that 802.11 a uses. The 802.11 a uses the same MAC as IEEE 802.11 b.

The present invention aims to provide a method for operating a cellular time division multiple access communication system such as a HiperLAN 2, Blue-tooth™, or IEEE 802.11 a or b type system, as well as a corresponding computer program product, mobile terminal and communication system.

### Summary of the invention

The invention provides for a method for operating a cellular time division multiple access communication system as set forth in independent claim 1. Further the invention provides for a computer program product for operating such a communication system as well as a corresponding mobile terminal and communication system as set forth in the further independent claims.

Preferred embodiments of the invention are defined in the dependent claims.

The present invention provides for a method for operating a cellular time division multiple access communication system which enables direct mode communication between the mobile terminals, such as the HiperLAN 2, Bluetooth™ and IEEE 802.11 a or b type systems.

In essence the present invention enables to dynamically define cells depending on actual traffic conditions. For example, if a cell is operated at the limits of its transmission capacity the cell is split into two cells if a request for an additional communication link is made by one of the participants. The splitting operation is performed by defining an additional central controller (CC) for the new cell and by selecting a subset of the mobile terminals of the cell to assign them to the new cell. Further, another transmission frequency is selected for the new cell in order to avoid interference. Likewise two cells can be merged, when the traffic load in the two cells is such that it can be accommodated by means of one transmission frequency in the merged cells.

In accordance with a preferred embodiment of the invention at least a subset of the mobile terminals within the cell is capable to operate in a central controller mode. Usually one of the mobile terminals within the cell takes the role of the central controller for the mobile terminals within that cell. When the cell capacity is reached an additional mobile terminal which is "CC capable" is designated as additional central controller for the new cell to be created.

In accordance with a further preferred embodiment of the invention the selection of mobile terminals of the cell to be assigned to the new cell is made by defining at least first and second graphs within the cell. Each of the graphs has nodes which represent mobile terminals within the cell which are linked by communication links. The graphs are not connected, i.e. there is no link between nodes of different graphs. The assignment of mobile terminals to the new cell is done such that preferably only mobile terminals belonging to the same graph are put into the new cell. This way the number of required communications crossing cell boundaries is minimised.

In accordance with a further preferred embodiment of the invention the selection of the additional central controller for the new cell is made by identifying a mobile terminal within the cell which is CC capable and which has a minimal average distance to the mobile terminals of the new cell. This selected mobile terminal which constitutes the additional central controller by definition also belongs to the new cell.

### Brief description of the drawings

In the following preferred embodiments of the invention will be described in greater detail by making reference to the drawings in which:
- Figure 1: is illustrative of a preferred embodiment of a method of the invention for operating a cellular time division multiple access communication system,
- Figure 2: is a network diagram showing the network status when a request for an additional communication link is raised,
- Figure 3: shows a network diagram of the communication system of figure 2 after a cell split has occurred,
- Figure 4: shows a block diagram of a device implementing the method of the invention.

### Detailed description

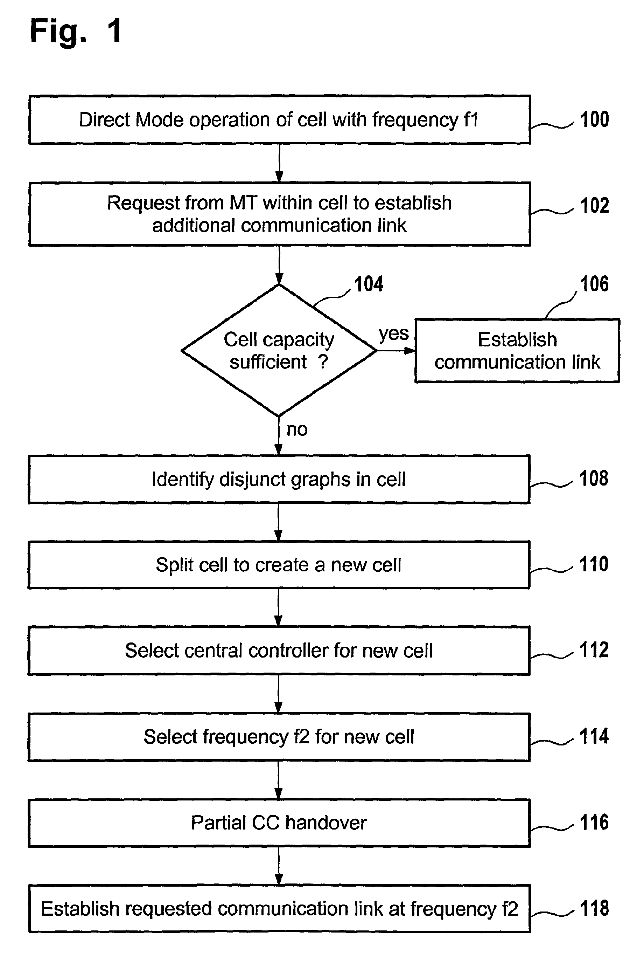

Figure 1 shows a flow chart which illustrates the operation of a cellular time division multiple access communication system in accordance with an embodiment of the present invention. Without restriction of generality reference is made in the following to a HiperLAN 2 type system.

In step 100 the HiperLAN 2 system is operated in the direct mode. For example there is only one cell with one mobile terminal taking the role of a central controller (CC). For instance there are a variety of consumer devices within the cell, such as a TV set, a video recorder, a radio, an amplifier and a DVD player.

All of these devices have an HiperLAN 2 interface and are CC capable. If the television set is switched on first it automatically takes the role of the central controller for the cell. If further devices are switched on these devices directly communicate without having to go through the central controller; the role of the central controller is to coordinate these direct communications. If the television set - the current central controller - is switched off another of the active devices takes the role of the central controller. This functionality is also referred to as "CC handover".

It is to be noted that all communication links within the cell use the same transmission frequency f1. In other words, the transmission channel having the transmission frequency f1 is time multiplexed to realize the communication links.

In step 102 a request for additional channel capacity is received. The request can come from one of the mobile terminals (MT) within the cell which requests to establish an additional communication link. Alternatively the request for additional channel capacity can also be caused by deteriorating transmission conditions with respect to an existing communication link. In the case of deteriorating transmission conditions there can be a need to change the modulation scheme.

A more robust modulation scheme usually requires more channel capacity for the same amount of data as more redundancy is required. Such a situation is managed by the link adaptation layer which adapts the channel capacity assigned to a link when the modulation scheme is altered. In this instance the request for additional channel capacity comes from the link adaptation layer. Without restriction of generality it is assumed in the following that the request for additional channel capacity is caused by a mobile terminals (MT) within the cell which requests to establish an additional communication link

In step 104 it is decided whether the cell capacity is sufficient to establish the requested additional communication link. If this is the case the link is established in step 106, whereby the central controller coordinates the establishment of the link.

If the cell capacity is insufficient to realize the additional communication link requested in step 102 the cell needs to be split into two cells. For this purpose graphs are identified in the cell in step 108.

Each graph has a number of nodes which are connected by edges. Each node in the graph is representative of a mobile terminal and each edge is representative of a communication link which exists or which is requested between the mobile terminals as represented by the nodes connected by the edge. The graphs are disjunct, i.e. the graphs have no common elements; in particular none of the nodes of one graph is connected to a node of another graph by an edge.

In step 110 the identification of disjunct graphs in step 108 is used to determine which ones of the mobile terminals are put into the new cell to be created. Preferably mobile terminals represented by nodes in a disjunct graph are put into the new cell while other mobile terminals being represented by the nodes of another disjunct graph remain in the original cell. This way cross cell telecommunication traffic is aimed to be minimised.

In step 112 a central controller is selected for the new cell. Preferably this is done by searching for a CC capable mobile terminal belonging to the new cell which has an average minimal distance to the mobile terminals within the new cell. In other words the new central controller is supposed to be as closed as possible to the "center of gravity" defined by the mobile terminals within the new cell.

In step 114 a frequency f2 is selected for the new cell in accordance with a dynamic frequency selection (DFS) algorithm.

In step 116 a CC handover operation of the mobile terminals assigned to the new cell from the central controller of the original cell to the central controller selected in step 112 of the new cell is carried out such that the new cell is split from the original cell. The communication links which are affected by the split are switched to the frequency f2. At this time the split of the cell is complete such that additional transmission capacity at frequency f2 is available. It is important to note that the original central controller of the original cell keeps its role as a central controller for the mobile terminals which remain in the original cell.

In step 118 the requested communication link is established in the new cell at frequency f2.

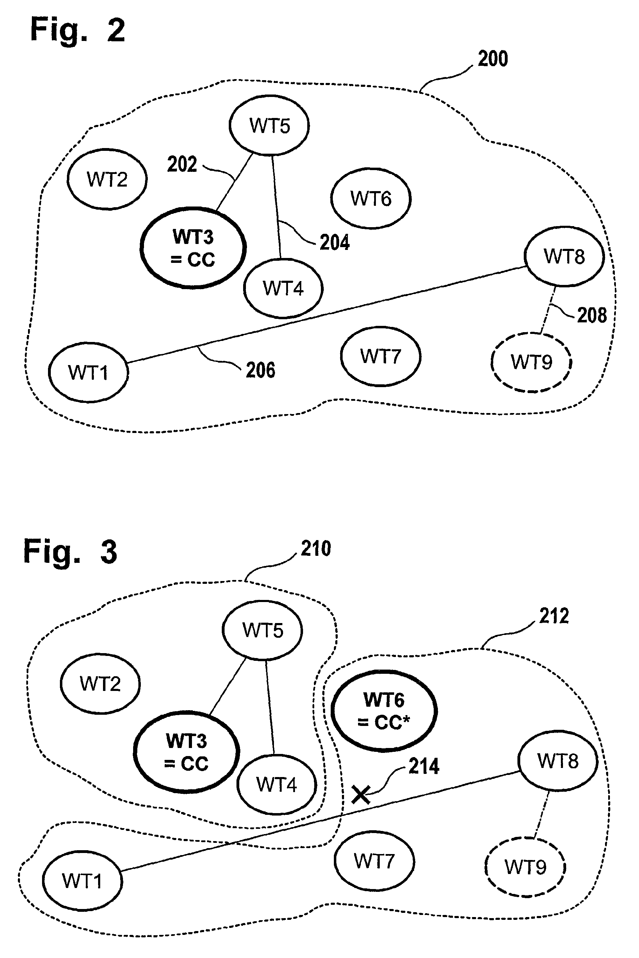

Figure 2 shows a status of the HiperLAN communication system corresponding to the status of the system in step 100.

Initially there is one cell 200 containing wireless mobile terminals WT1, WT2, WT3, WT4, WT5, WT6, WT7, WT8, WT9. The wireless terminal WT3 has the role of a central controller (CC) for the wireless terminals within cell 200.

Within the cell 200 there are existing communication links between a variety of the wireless terminals WTi: communication link 202 between WT3 and WT5, communication link 204 between WT5 and WT4, and communication link 206 between WT1 and WT8. All these communication links use the same frequency f1 as a transmission channel which is time multiplexed.

Further it is to be noted that at least some of the wireless terminals WTi within cell 200 are CC capable in addition to the wireless terminal WT3.

In the status as depicted in figure 2 the channel capacity of cell 200 is already used to a large extend when a request for an additional communication link 208 to be established between wireless terminals WT8 and WT9 is made. The available channel capacity at the transmission frequency f1 is not sufficient to establish this additional link 208. As a consequence the cell 200 is split into the cells 210 and 212 as shown in figure 3.

To perform the split operation disjunct graphs are identified in the cells 200. In the example considered here there are the following disjunct graphs: G₁ = [WT3, WT5, WT4], G₂ = [WT1, WT8, WT9], G₃ = [WT2], G₄ = [WT6] and G₅ = [WT7].

The graph G₁ has two edges which represent the communication links 202 and 204, respectively and the graph G₂ has two edges which represent the communication link 206 and the requested communication link 208, respectively.

It is advantageous to assign wireless terminals WTi of the cell 200 which belong to different graphs to different cells in order to minimise cross cell communication traffic.

For example the wireless terminals WTi belonging to the graph G₂ are put into the new cell 212, while the wireless terminals WTi of the graph G₁ are assigned to the cell 210 which is constituted by the remaining wireless terminals of the original cell 200. The distribution of the further wireless terminals belonging to the graphs G₃, G₄ and G₅ between the cells 210 and 212 is less important, as there are no corresponding active or requested communication links with respect to these wireless terminals.

Figure 3 shows the result of the split operation where the wireless terminals WT2, WT3, WT4 and WT5 are assigned to the cell 210 and the wireless terminals WT1, WT6, WT7, WT8 and WT9 are assigned to the cell 212.

The wireless terminal WT3 within cell 210 keeps its role as a central controller; also the frequency selection of transmission frequency f1 remains the same for cell 210.

For cell 212 an additional central controller is selected. In the example considered here the wireless terminal WT6 is chosen as this is relatively close to the wireless terminals WT1, WT7, WT8 and WT9 within the cell 212. Preferably the central controller CC* for cell 212 is chosen to be close to the centroid 214 of the wireless terminals within cell 212.

It is to be noted that this splitting operation is reversible: When the traffic within cells 210 and 212 decreases to a level which can be accommodated by a single transmission frequency such as the frequency f1 the system can go back to the initial status as depicted in figure 2 with only one cell and one central controller.

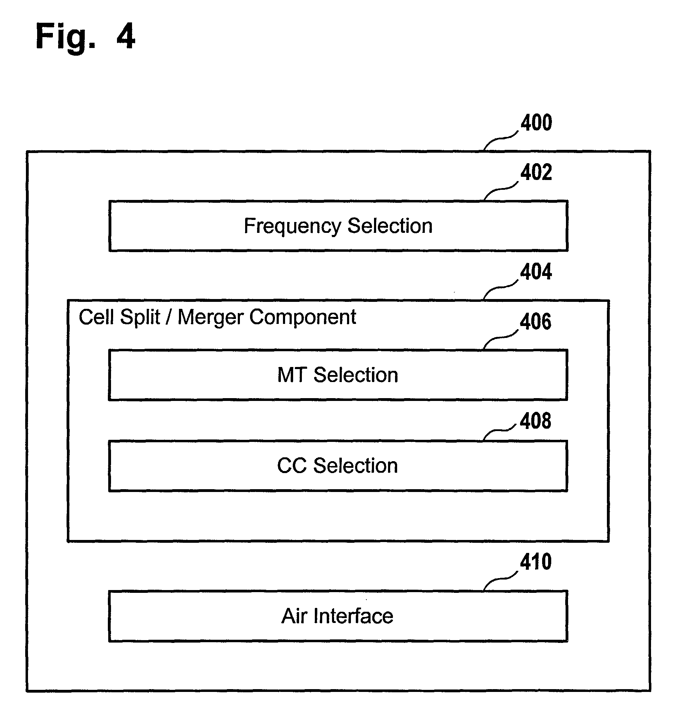

Figure 4 shows a control system 400 implementing the principles of the present invention. The control system 400 can be realized by means of a computer program running on a mobile terminal or another instance of the communication system. It is to be noted that the functionalities of the control system 400 can be implemented in hardware, software or a mixture of hardware and software components. In particular, it is possible to use one or more all purpose integrated circuit chips which are programmed to realize the functionalities of the control system 400. Alternatively, more or less of the functionalities can be hardware implemented, in particular by means of application specific integrated circuit chips (ASICs).

The control system 400 has a frequency selection module 402 which implements a dynamic frequency selection scheme.

Further the control system 400 has a component 404 which is used for the purpose of splitting and merging cells. The component 404 has a module 406 for selecting of mobile terminals for a split or a merge operation.

Further the component 404 has a module 408 for selecting a new central controller to perform a split operation or to select one of the existing central controllers as the central controller for the merged cells.

Further the control system 400 has an air interface 410 for communicating with the mobile terminals within the cell. In particular, the air interface 410 can be used to send broadcast messages to perform handover operations or switch frequencies.

### list of reference numerals

- cell: 200
- communication link: 202
- communication link: 204
- communication link: 206
- communication link: 208
- cell: 210
- cell: 212
- centroid: 214
- central system: 400
- module: 402
- component: 404
- module: 406
- module: 408
- air interface: 410

## Claims

1. A method for operating a cellular time division multiple access communication system in direct mode, the communication system having a set of mobile terminals within a cell, at least a first subset of the mobile terminals being capable of operating in a central controller mode and a first one of the mobile terminals of the first subset being in central controller mode for the cell, and a first transmission channel having a first transmission frequency being selected to establish communication links in the cell, the method comprising the steps of:
- receiving a request for additional capacity of the first transmission channel,
- when the cell capacity is not sufficient to establish the additional communication link: splitting the cell into at least first and second cells by selecting a second one of the mobile terminals of the first subset to operate in the central controller mode for the second cell, selecting a second frequency to establish communication links in the second cell, and selecting a second subset of the mobile terminals of the set of mobile terminals to belong to the second cell.

2. The method of claim 1, whereby the communication system is a HiperLAN 2, IEEE 802.11 a or b, or a Bluetooth™ type system.

3. The method of claim 1 further comprising defining first and second unconnected graphs, the first and second unconnected graphs comprising mobile terminals of the set of mobile terminals as nodes being linked by the communication links, for the selection of the second subset.

4. The method of claim 1 further comprising selecting the second one of the mobile terminals by identifying a mobile terminal of the first subset having an average distance to the mobile terminals of the second subset which is minimal.

5. The method of claim 1 further comprising merging the first and second cells, when the traffic in the first and second cells is reduced such that the capacity of the cell is sufficient for the traffic.

6. A computer program product, such as a digital storage medium or a downloadable file, comprising a program component for operating a cellular time division multiple access communication system in direct mode, the communication system having a set of mobile terminals within a cell, at least a first subset of the mobile terminals being capable of operating in a central controller mode and a first one of the mobile terminals of the first subset being in central controller mode for the cell, and a first transmission channel having a first transmission frequency being selected to establish communication links in the cell, the program component being adapted to perform the steps of:
- receiving a request for additional capacity of the first transmission channel,
- when the cell capacity is not sufficient to establish the additional communication link: splitting the cell into at least first and second cells by selecting a second one of the mobile terminals of the first subset to operate in the central controller mode for the second cell, selecting a second frequency to establish communication links in the second cell, and selecting a second subset of the mobile terminals of the set of mobile terminals to belong to the second cell.

7. The computer program product of claim 6, the program component further being adapted to perform the step of defining first and second unconnected graphs, the first and second unconnected graphs comprising mobile terminals of the set of mobile terminals as nodes being linked by the communication links, for the selection of the second subset.

8. The computer program product of claim 6, the program component further being adapted to select the second one of the mobile terminals by identifying a mobile terminal of the first subset having an average distance to the mobile terminals of the second subset which is minimal.

9. A mobile terminal for a cellular time division multiple access communication system, the communication system being adapted to be operated in direct mode, the communication system having a set of mobile terminals within a cell (200), at least a first subset of the mobile terminals being capable of operating in a central controller (CC) mode and a first one of the mobile terminals of the first subset being in central controller mode for the cell, and a first transmission channel having a first transmission frequency (f1) being selected to establish communication links (202, 204, 206) in the cell, the mobile terminal comprising:
- a central controller mode component,
- a receiving component for receiving a request for additional capacity of the first transmission channel,
- a splitting component for splitting the cell into first (201) and second cells (212) when the cell capacity is not sufficient for the request by selecting a second one of the mobile terminals of the first subset to operate in the central controller mode for the second cell, selecting a second frequency (f2) to establish communication links in the second cell, and selecting a second subset of the mobile terminals of the set of mobile terminals to belong to the second cell, the splitting component preferably being adapted for defining first and second unconnected graphs, the first and second unconnected graphs comprising mobile terminals of the set of mobile terminals as nodes being linked by the communication links, for the selection of the second subset.

10. A cellular time division multiple access communication system being capable of direct mode communication, the communication system having a set of mobile terminals within a cell, at least a first subset of the mobile terminals being capable of operating in a central controller mode and a first one of the mobile terminals of the first subset being in central controller mode for the cell, and a first transmission channel having a first transmission frequency being selected to establish communication links in the cell, the communication system further comprising:
- a central controller mode component,
- a receiving component for receiving a request for additional capacity of the first transmission channel,
- a splitting component for splitting the cell into first (201) and second cells (212) when the cell capacity is not sufficient for the request by selecting a second one of the mobile terminals of the first subset to operate in the central controller mode for the second cell, selecting a second frequency (f2) to establish communication links in the second cell, and selecting a second subset of the mobile terminals of the set of mobile terminals to belong to the second cell.
